# EUROPÄISCHE PATENTSCHRIFT

(11) **EP 3 211 280 B1**
(45) Veröffentlichungstag und Bekanntmachung des Hinweises auf die Patenterteilung: **29.01.2020**
(21) Anmeldenummer: 17154399.4
(22) Anmeldetag: 02.02.2017
(51) Int. Cl.: F16K 31/06

(54) **GASVENTIL UND VERFAHREN ZU SEINER ANSTEUERUNG**
GAS VALVE AND METHOD FOR ITS CONTROL
VANNE À GAZ ET SON PROCÉDÉ DE COMMANDE

(30) Priorität: 24.02.2016 DE 102016103249
(43) Veröffentlichungstag der Anmeldung: 30.08.2017
(73) Patentinhaber: Truma Gerätetechnik GmbH & Co. KG, 85640 Putzbrunn (DE)
(72) Erfinder: Höflinger, Ulrich, 80805 München (DE)
(74) Vertreter: Prinz & Partner mbB

(56) Entgegenhaltungen:
- EP-A1- 1 130 300
- EP-A2- 2 642 495
- DE-A1- 10 216 484
- US-A- 6 056 000
- US-A1- 2009 026 397
- US-A1- 2010 308 243

## Beschreibung

Die Erfindung betrifft ein Verfahren zum Steuern des Durchflussquerschnitts eines Gasventils.

Für mobile Gasheizungen, wie sie beispielsweise in Campern oder Sportbooten eingesetzt werden, werden Gasventile verwendet, mit denen der Gasdurchfluss zu einem Gasbrenner der Gasheizung gesteuert wird. Das Gasventil besteht vereinfacht dargestellt aus einem Ventilkörper, in dem ein Durchflussquerschnitt und ein Ventilsitz vorgesehen sind. Es ist ein Ventilelement vorgesehen, das ausgehend von einer geschlossenen Stellung, in der es am Ventilsitz anliegt und den Durchflussquerschnitt verschließt, in eine geöffnete Stellung bewegt werden kann, in welcher der Durchflussquerschnitt freigegeben ist.

Das Ventilelement ist mit einem Anker verbunden, dem eine Spule zugeordnet ist. Wenn die Spule erregt wird, also mit Strom versorgt wird, verstellt diese den Anker so, dass das Ventilelement in die geöffnete Stellung bewegt wird. Weiterhin ist eine Feder vorgesehen, die auf den Anker oder das Ventilelement so einwirkt, dass sich das Ventilelement in der geschlossenen Stellung befindet, wenn die Spule stromlos ist.

Aus dem Stand der Technik bekannt ist, dass dem Anker zwei Wicklungen zugeordnet sind, nämlich eine Anzugswicklung und eine Haltewicklung.

Die Anzugswicklung dient dazu, eine große Kraft auf den Anker auszuüben und diesen entgegen der Wirkung der Feder so zu verstellen, dass das Ventilelement in die geöffnete Stellung gelangt. Hierzu ist ein relativ hoher elektrischer Strom erforderlich.

Die Haltewicklung dient dazu, den Anker in der geöffneten Stellung zu halten, nachdem er von der Anzugswicklung in diese verstellt wurde. Die zum Halten des Ankers in der geöffneten Stellung erforderliche Kraft ist geringer als die Kraft, die mittels der Anzugswicklung bereitgestellt werden muss. Dementsprechend muss die Haltewicklung auch nur mit einem vergleichsweise geringen Strom versorgt werden, der in der Größenordnung von 20 % des Stroms der Anzugswicklung beträgt. Die Haltewicklung allein ist nicht in der Lage, den Anker in die geöffnete Stellung zu bringen.

Wenn das Gasventil geöffnet werden soll, wird an die Anzugswicklung ein kurzer Stromimpuls angelegt, um den Anker in die geöffnete Stellung zu ziehen. Anschließend wird die Haltewicklung mit einem konstanten Strom erregt, um den Anker dauerhaft in der geöffneten Stellung zu halten.

Nachteilig hierbei ist, dass aufgrund des Stromimpulses, mit dem die Anzugswicklung zum Öffnen des Gasventils erregt wird, der Anker und auch das Ventilelement mit großer Geschwindigkeit in die geöffnete Stellung verstellt werden. Hierbei schlagen sie an einem Anschlag an, wodurch Geräusche und mechanische Schwingungen im gesamten System entstehen.

Aus der DE 102 16 484 A1 ist darüber hinaus bekannt, eine Magnetspule eines Elektromagnetventils mit einen pulsbreitenmodulierten Strom zu erregen. Der Tastgrad verringert sich zu einem vorbestimmten Zeitpunkt, so dass sich die Verstellgeschwindigkeit des Ankers verringert. Es lässt sich aber dennoch nicht zuverlässig verhindern, dass der Anker mit einer unerwünscht hohen Geschwindigkeit auf den Anschlag trifft.

Die US 6,056,000 A beschreibt ein Ventil, das mittels eines pulsweitenmodulierten Signals betrieben werden kann. Das Ventil weist einen Ventilkörper mit einem Dichtelement auf, das in einem Strömungskanal zwischen einem Einlass und einem Auslass gelagert ist und einen Ventilsitz verschließen kann. An dem Dichtelement ist ein beweglicher Kern angeordnet, der innerhalb einer Spule gelagert ist. Wenn die Spule bestromt wird, wird das Dichtelement in eine geöffnete Stellung bewegt.

Die EP 1 130 300 A1 beschreibt einen Ventilkörper mit einem Ventilelement, das einen Strömungskanal zwischen einem Einlass und einem Auslass öffnen oder schließen kann. Der Ventilkörper weist des Weiteren eine Spule auf, die bestromt werden kann, um das Ventilelement in eine geöffnete Stellung zu bewegen. Das Ventil kann mittels Pulsweitenmodulation betrieben werden.

Die US 2010/0308243 A1 beschreibt ein Magnetventil, das geräuscharm betrieben werden kann.

Die US 2009/0026397 A1 beschreibt ein Verfahren zur kontrollierten Steuerung von Ventilen.

Die DE 102 16 484 A1 beschreibt ein Verfahren zur elektrischen Ansteuerung eines direktwirkenden Elektromagnetventils.

Die Aufgabe der Erfindung besteht darin, die beim Öffnen des Gasventils entstehenden Geräusche zu verringern.

Zur Lösung dieser Aufgabe ist erfindungsgemäß ein Verfahren zum Steuern des Durchflussquerschnitts eines Gasventils vorgesehen, das einen Ventilkörper, in dem ein Strömungskanal vorgesehen ist, ein darin zwischen einer geschlossenen und einer geöffneten Stellung verstellbares Ventilelement, einen Anker, eine Spule, eine Feder und eine Steuerschaltung aufweist, wobei zum Öffnen des Strömungsquerschnitts die folgenden Schritte vorgesehen sind:
- die Steuerschaltung erregt die Spule mit einem pulsbreitenmodulierten Strom, dessen Tastgrad ausgehend von einem Startwert so weit erhöht wird, bis sich der Anker entgegen der Wirkung der Feder aus der geschlossenen Stellung in Bewegung setzt;
- die Steuerschaltung verringert den Tastgrad, bevor das Ventilelement die geöffnete Stellung erreicht hat;
- die Steuerschaltung setzt den Tastgrad auf einen vordefinierten Haltewert, mit dem das Ventilelement in der geöffneten Stellung gehalten wird.

Die Erfindung beruht auf dem Grundgedanken, lediglich eine einzige Spule zum Verstellen des Ventilelements zu verwenden, wobei die Spule mit einem variablen Strom versorgt wird. Zu Beginn des Öffnungsvorgangs wird ein höherer Strom bereitgestellt, der verringert wird, sobald sich das Ventilelement in Bewegung gesetzt hat. Um das Ventilelement in der geöffneten Stellung zu halten, wird ein konstanter Haltestrom verwendet. Der effektiv wirksame Strom wird dabei durch Pulsbreitenmodulation der an die Spule angelegten Spannung eingestellt. Eine Pulsbreitenmodulation lässt sich auf elektronischem Wege mit vergleichsweise geringem Aufwand und hohem Wirkungsgrad erzielen.

Vorzugsweise ist vorgesehen, dass ein Stromsensor den durch die Spule fließenden Strom auswertet, um eine Bewegung des Ankers zu erfassen. Dies ermöglicht, einen Regelkreis zu implementieren, mit dem der Öffnungsstrom situationsangepasst verringert werden kann. Weiterhin lässt sich mit geringem Aufwand ohne externe Positionssensoren überwachen, wann sich der Anker zu bewegen beginnt.

Vorzugsweise ist vorgesehen, dass die Steuerschaltung den Tastgrad stufenartig verringert, sobald sich der Anker in Richtung der geöffneten Stellung in Bewegung setzt. Auf diese Weise wird verhindert, dass der Anker auf eine vergleichsweise hohe Geschwindigkeit beschleunigt wird, bevor er seine geöffnete Stellung erreicht hat. Sobald nämlich das Ventilelement und der Anker die Haftreibung überwunden und sich in Bewegung gesetzt haben, ist zum Aufrechterhalten der Bewegung des Ankers hin in die geöffnete Stellung eine Kraft ausreichend, die kleiner als diejenige Kraft ist, die notwendig ist, um das Ventilelement und den Anker überhaupt in Bewegung zu setzen.

Gemäß einer Ausgestaltung der Erfindung ist vorgesehen, dass die Steuerschaltung den Tastgrad, nachdem er verringert wurde, konstant hält, bis er schließlich auf den Haltewert gesetzt wird. Diese Ausgestaltung zeichnet sich durch einen vergleichsweise einfachen Algorithmus zum Festlegen des Tastgrades aus.

Gemäß einer alternativen Ausgestaltung ist vorgesehen, dass die Steuerschaltung den Tastgrad, nachdem er verringert wurde, variiert, bis er schließlich auf den Haltewert gesetzt wird. Dabei kann vorgesehen sein, dass die Steuerschaltung den Tastgrad verringert, wodurch gegen Ende des Öffnungsvorgangs auch die auf den Anker wirkende Öffnungskraft verringert wird. Hierdurch wird gewährleistet, dass der Anker und das Ventilelement mit vergleichsweise geringer Geschwindigkeit den vollständig geöffneten Zustand erreichen. Es kann alternativ auch vorgesehen sein, dass der Tastgrad während des Öffnungsvorgangs erhöht wird. Auf diese Weise kann die während des Öffnens ansteigende Kraft der Feder kompensiert werden, sodass der Anker und das Ventilelement mit der gewünschten Geschwindigkeit in die vollständig geöffnete Stellung verstellt werden.

Um den Durchflussquerschnitt zu verschließen, wird der Haltestrom abgeschaltet. Die Feder gewährleistet dann, dass das Ventilelement wieder zurück in die geschlossene Stellung verstellt wird.

Der Haltestrom kann schlagartig abgestellt werden, wenn das Ventil geschlossen werden soll. Es ist auch möglich, dass der Haltestrom zunächst verringert wird, bevor er dann vollständig abgeschaltet wird. Dies kann im Hinblick auf die Geräuschentwicklung vorteilhaft sein.

Zur Lösung der oben genannten Aufgabe ist auch ein Gasventil mit einem Ventilelement vorgesehen, einem Ventilsitz, mit dem das Ventilelement zusammenwirken kann, um einen Durchflussquerschnitt zu schließen oder freizugeben, einer Feder, die das Ventilelement in eine geschlossene Stellung beaufschlagt, einem Anker, der mit dem Ventilelement verbunden ist, einer Spule, mit der der Anker entgegen der Wirkung der Feder in eine geöffnete Stellung verstellt werden kann, einer Steuerschaltung, die ein pulsbreitenmoduliertes Signal zur Erregung der Spule bereitstellen kann, und einem Stromsensor, mit dem der durch die Spule fließende Strom so überwacht werden kann, dass das Verfahren nach einem der vorhergehenden Ansprüche durchgeführt werden kann. Hinsichtlich der sich ergebenden Vorteile wird auf die obigen Erläuterungen verwiesen.

Die Erfindung wird nachfolgend anhand einer Ausführungsform beschrieben, die in den beigefügten Zeichnungen dargestellt ist. In diesen zeigen:
- Figur 1 schematisch ein erfindungsgemäßes Gasventil; und
- Figur 2 in einem Diagramm den Tastgrad des durch die Spule des in Figur 1 gezeigten Gasventils fließenden Stroms beim Öffnen und beim Schließen des Gasventils.

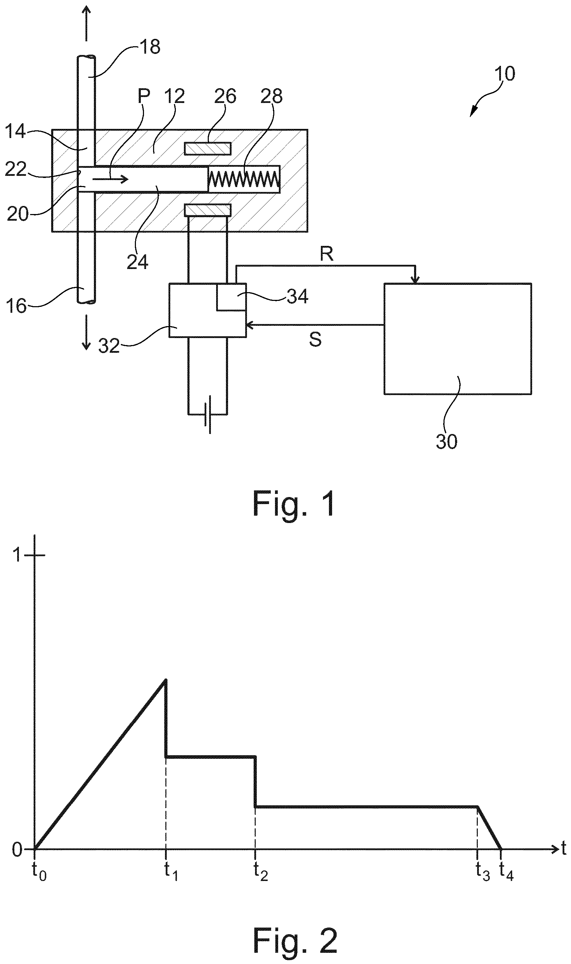

In Figur 1 ist ein Gasventil 10 gezeigt, das einen Ventilkörper 12 aufweist, in dem ein Strömungskanal 14 für Verbrennungsgas vorgesehen ist. Durch den Strömungskanal 14 kann, wenn dieser geöffnet ist, ein Verbrennungsgas strömen, das über eine Versorgungsleitung 16 von beispielsweise einer Druckgasflasche bereitgestellt und über eine Anschlussleitung 18 zu einem Gasbrenner geführt wird.

Im Ventilkörper 12 ist ein Ventilelement 20 verstellbar angeordnet, das mit einem Ventilsitz 22 (hier schematisch als Wand des Strömungskanals 14 dargestellt) so zusammenwirken kann, dass in der geschlossenen Stellung des Ventilelements 20 der Durchflussquerschnitt durch den Strömungskanal 14 verschlossen ist; es kann kein Gas durch das Gasventil 10 hindurchströmen.

Mit dem Ventilelement 20 verbunden (oder einstückig mit diesem ausgeführt) ist ein Anker 24, der ebenfalls im Ventilkörper 12 verschiebbar ist. Dem Anker 24 ist eine einzige Spule 26 zugeordnet.

Weiterhin ist eine Feder 28 vorgesehen, die den Anker 24 und das Ventilelement 20 in die in Figur 1 gezeigte, geschlossene Stellung beaufschlagt.

Zum Gasventil 10 gehört auch eine Steuerschaltung 30, die einer Ansteuerelektronik 32 ein Steuersignal S bereitstellt. Die Ansteuerelektronik 32 stellt den Strom bereit, der durch die Spule 26 fließt.

In die Ansteuerelektronik 32 ist auch ein Stromsensor 34 integriert, mit dem der durch die Spule 26 fließende Strom überwacht wird. Der Stromsensor 34 stellt der Steuerschaltung 30 ein Rückmeldesignal R bereit, sodass in der Steuerschaltung 30 eine Information über die Höhe des durch die Spule 26 fließenden Stromes zur Verfügung steht.

Die Ansteuerelektronik 32 erregt die Spule 26 mit einem pulsbreitenmodulierten Strom, also einem Strom, der entsprechend einem vorgegebenen Verhältnis periodisch ein- und ausgeschaltet wird. Die Leistungsregelung erfolgt also dadurch, dass die an die Spule 26 angelegte Spannung periodisch zwischen 0 und der Versorgungsspannung ein- und ausgeschaltet wird, wobei sich der wirksame Stromfluss als der Durchschnitt des Stroms ergibt, der im Mittel in den Phasen mit ausgeschalteter Spannung und den Phasen mit angelegter Spannung fließt. Kennzeichnende Größe für eine solche Pulsbreitenmodulation ist der sogenannte Tastgrad, der den Anteil der Phasen mit eingeschalteter Spannung im Verhältnis zur gesamten Periodendauer angibt. Bei einem Tastgrad von 0,9 liegt also für eine Zeitdauer von 90 % einer Periode die Versorgungsspannung an, während sie für eine Zeitdauer von 10 % ausgeschaltet ist.

Anhand von Figur 2 wird nachfolgend das Öffnen und Schließen des Ventilelements 20 in einem Ausführungsbeispiel erläutert.

Zum Zeitpunkt t₀ beginnt die Steuerelektronik 30, das Gasventil 10 zu öffnen. Zu diesem Zweck wird ein steigender Strom an die Spule 26 angelegt, hier verdeutlicht durch einen ansteigenden Tastgrad.

Im Ausführungsbeispiel startet die Stromversorgung mit einem Tastgrad von 0. Es ist auch möglich, dass als Startwert ein oberhalb von 0 liegender Wert gewählt wird.

Der Tastgrad steigt an, bis zum Zeitpunkt t₁ das Ventilelement 20 und der Anker 24 beginnen, die vollständig geschlossene Stellung zu verlassen (siehe den Pfeil P in Figur 1). Dies wird vom Stromsensor 34 erfasst, da der sich relativ zur Spule 26 bewegende Anker 24 die Induktivität der Spule ändert, sodass sich auch der durch die Spule fließende Strom ändert.

Der zum Öffnen des Ventilelements 20 nötige Tastgrad kann unterschiedlich sein. Beispielsweise kann, wenn das Gasventil 10 für längere Zeit nicht aktiviert wurde, eine höhere Kraft zum Öffnen des eventuell leicht verklebten Ventilelements 20 nötig sein, als wenn das Ventilelement 20 im laufenden Betrieb gerade regelmäßig geöffnet und geschlossen wurde.

Sobald erfasst wird, dass sich das Ventilelement 20 und der Anker 24 bewegen, wird der Tastgrad verringert, um zu verhindern, dass der Anker 24 und das Ventilelement 20 weiter beschleunigt werden. Mit dem verringerten Tastgrad werden der Anker 24 und das Ventilelement 20 weiter verstellt, bis zum Zeitpunkt t₂ die vollständig geöffnete Stellung erreicht ist.

Zum Zeitpunkt t₂ wird der Tastgrad weiter verringert, da in diesem Zustand lediglich ein Haltestrom bereitgestellt werden muss, mit dem der Anker 24 und das Ventilelement 20 entgegen der Wirkung der Feder 28 in der vollständig geöffneten Stellung gehalten werden müssen (siehe die Phase vom Zeitpunkt t₂ bis zum Zeitpunkt t₃).

Wenn das Gasventil 10 wieder geschlossen werden soll, wird der Tastgrad auf 0 verringert (siehe die Phase von t₃ bis t₄). Im hier gezeigten Ausführungsbeispiel wird der Tastgrad nicht schlagartig auf 0 gesetzt, sondern kontinuierlich bis auf 0 verringert.

Im gezeigten Ausführungsbeispiel wird während der Öffnungsphase des Ventilelements 20 (Zeitphase zwischen t₁ und t₂) hier ein konstanter Tastgrad verwendet. Es kann jedoch in Abhängigkeit von den Rahmenbedingungen auch möglich sein, einen noch weiter absinkenden Tastgrad zu verwenden, damit der Anker 24 möglichst sanft in seine vollständig geöffnete Stellung gelangt.

Alternativ kann auch vorgesehen sein, dass der Tastgrad zwischen t1 und t2 wieder etwas erhöht wird, um die mit zunehmendem Öffnen ansteigende Kraft der Feder 28 zu kompensieren.

## Patentansprüche

1. Verfahren zum Steuern des Durchflussquerschnitts eines Gasventils (10), das einen Ventilkörper (12), in dem ein Strömungskanal (14) vorgesehen ist, ein darin zwischen einer geschlossenen und einer geöffneten Stellung verstellbares Ventilelement (20), einen Anker (24), eine Spule (26), eine Feder (28) und eine Steuerschaltung (30) aufweist, **dadurch gekennzeichnet, dass** zum Öffnen des Strömungskanals (14) die folgenden Schritte vorgesehen sind:
- die Steuerschaltung (30) erregt die Spule (26) mit einem pulsbreitenmodulierten Strom, dessen Tastgrad ausgehend von einem Startwert so weit erhöht wird, bis sich der Anker (24) entgegen der Wirkung der Feder (28) aus der geschlossenen Stellung in Bewegung setzt;
- die Steuerschaltung (30) verringert den Tastgrad, bevor das Ventilelement (20) die geöffnete Stellung erreicht hat;
- die Steuerschaltung (30) setzt den Tastgrad auf einen vordefinierten Haltewert, mit dem das Ventilelement (20) in der geöffneten Stellung gehalten wird.

2. Verfahren nach Anspruch 1, **dadurch gekennzeichnet, dass** ein Stromsensor (34) den durch die Spule (26) fließenden Strom auswertet, um eine Bewegung des Ankers (24) zu erfassen.

3. Verfahren nach Anspruch 1 oder Anspruch 2, **dadurch gekennzeichnet, dass** die Steuerschaltung (30) den Tastgrad stufenartig verringert, sobald sich der Anker (24) in Richtung der geöffneten Stellung in Bewegung setzt.

4. Verfahren nach einem der vorhergehenden Ansprüche, **dadurch gekennzeichnet, dass** die Steuerschaltung (30) den Tastgrad, nachdem er verringert wurde, konstant hält, bis er schließlich auf den Haltewert gesetzt wird.

5. Verfahren nach einem der Ansprüche 1 bis 3, **dadurch gekennzeichnet, dass** die Steuerschaltung den Tastgrad, nachdem er verringert wurde, variiert, bis er schließlich auf den Haltewert gesetzt wird.

6. Verfahren nach einem der vorhergehenden Ansprüche, **dadurch gekennzeichnet, dass** zum Schließen des Durchflussquerschnitts der Haltestrom abgeschaltet wird.

7. Verfahren nach Anspruch 6, **dadurch gekennzeichnet, dass** der Haltestrom zunächst verringert wird, bevor er dann vollständig abgeschaltet wird.

## Claims

1. A method for controlling the throughflow cross-section of a gas valve (10) which includes a valve body (12) in which a flow channel (14) is provided, a valve element (20) adjustable therein between a closed and an open position, an armature (24), a coil (26), a spring (28) and a control circuit (30), **characterized in that** for opening the flow channel (14) the following steps are provided:
- the control circuit (30) energizes the coil (26) with a pulse-width-modulated current whose duty cycle is increased proceeding from a starting value, until the armature (24) starts to move from the closed position against the action of the spring (28);
- the control circuit (30) reduces the duty cycle before the valve element (20) has reached the open position;
- the control circuit (30) sets the duty cycle to a predefined holding value with which the valve element (20) is held in the open position.

2. The method according to claim 1, **characterized in that** a current sensor (34) evaluates the current flowing through the coil (26) in order to detect a movement of the armature (24).

3. The method according to claim 1 or claim 2, **characterized in that** the control circuit (30) incrementally reduces the duty cycle as soon as the armature (24) starts to move in the direction of the open position.

4. The method according to any of the preceding claims, **characterized in that** the control circuit (30) keeps the duty cycle constant after it has been reduced until it finally is set to the holding value.

5. The method according to any of claims 1 to 3, **characterized in that** the control circuit varies the duty cycle after it has been reduced until it finally is set to the holding value.

6. The method according to any of the preceding claims, **characterized in that** for closing the throughflow cross-section the holding current is switched off.

7. The method according to claim 6, **characterized in that** the holding current first is reduced, before it is then switched off completely.

## Revendications

1. Procédé de commande de la section de passage d'une vanne à gaz (10) comprenant un corps de vanne (12) dans lequel est prévu un canal d'écoulement (14), un élément de vanne (20) réglable entre une position fermée et une position ouverte, un induit (24), une bobine (26), un ressort (28) et un circuit de commande (30), **caractérisé en ce que** les étapes suivantes sont prévues pour ouvrir le canal d'écoulement (14) :
- le circuit de commande (30) excite la bobine (26) avec un courant modulé en largeur d'impulsion, dont le rapport cyclique est augmenté à partir d'une valeur de départ jusqu'à ce que l'induit (24) commence à se déplacer depuis la position fermée contre l'action du ressort (28) ;
- le circuit de commande (30) réduit le rapport cyclique avant que l'élément de vanne (20) ait atteint la position ouverte ;
- le circuit de commande (30) fixe le rapport cyclique à une valeur de maintien prédéfinie au moyen de laquelle l'élément de vanne (20) est maintenu en position ouverte.

2. Procédé selon la revendication 1, **caractérisé en ce qu'**un capteur de courant (34) évalue le courant traversant la bobine (26) pour détecter un mouvement de l'induit (24).

3. Procédé selon la revendication 1 ou la revendication 2, **caractérisé en ce que** le circuit de commande (30) réduit progressivement le rapport cyclique dès que l'induit (24) commence à se déplacer dans la direction de la position ouverte.

4. Procédé selon l'une des revendications précédentes, **caractérisé en ce que** le circuit de commande (30) maintient le rapport cyclique constant après sa réduction jusqu'à ce qu'il soit finalement fixé à la valeur de maintien.

5. Procédé selon l'une des revendications 1 à 3, **caractérisé en ce que** le circuit de commande varie le rapport cyclique après sa réduction jusqu'à ce qu'il soit finalement fixé à la valeur de maintien.

6. Procédé selon l'une des revendications précédentes, **caractérisé en ce que** le courant de maintien est coupé pour fermer la section de passage.

7. Procédé selon la revendication 6, **caractérisé en ce que** le courant de maintien est d'abord réduit avant d'être complètement coupé.
